# EUROPÄISCHE PATENTSCHRIFT

(11) **EP 1 726 471 B1**
(45) Veröffentlichungstag und Bekanntmachung des Hinweises auf die Patenterteilung: **22.10.2008**
(21) Anmeldenummer: 06113135.5
(22) Anmeldetag: 26.04.2006
(51) Int. Cl.: B60K 31/00, B60W 40/06, B60W 30/14

(54) **Geschwindigkeitsregler für Kraftfahrzeuge**
Cruise control for motor vehicles
Régulateur de vitesse pour véhicules à moteur

(30) Priorität: 23.05.2005 DE 102005023701
(43) Veröffentlichungstag der Anmeldung: 29.11.2006
(73) Patentinhaber: ROBERT BOSCH GMBH, 70442 Stuttgart (DE)
(72) Erfinder: Hellmann, Manfred, 71706, Hardthof (DE); Urban, Werner, 71665, Vaihingen/Enz (DE)

(56) Entgegenhaltungen:
- EP-A- 1 020 315
- EP-A- 1 110 794
- DE-A- 3 836 471
- US-A- 4 987 966

## Beschreibung

### Stand der Technik

Die Erfindung betrifft einen Geschwindigkeitsregler für Kraftfahrzeuge, mit einer Überwachungeinrichtung zum Modifizieren der Regelfunktion in Abhängigkeit vom Fahrbahnzustand.

Geschwindigkeitsregler ermöglichen es, die Geschwindigkeit des Fahrzeugs automatisch auf eine vom Fahrer gewählte Wunschgeschwindigkeit zu regeln. Es sind auch sogenannte ACC-Systeme (Adaptive Cruise Control) bekannt, mit denen die Geschwindigkeit so geregelt werden kann, daß ein vorausfahrendes Fahrzeug, das beispielsweise mit einem Radarsensor geortet wurde, automatisch in einem angemessenen Sicherheitsabstand verfolgt wird. Unter normalen Bedingungen wird durch ein solches System die Verkehrssicherheit erhöht.

Es können jedoch gelegentlich Situationen auftreten, in denen der Regeleingriff des Geschwindigkeitsreglers eher schädlich ist. Eine solche Situation kann beispielsweise dann auftreten, wenn die durch den Geschwindigkeitsregler veranlaßte Fahrzeugbeschleunigung auf eisglatter Fahrbahn zu einem Durchdrehen der Antriebsräder führt, so daß das Fahrzeug ausbricht und ins Schleudern gerät.

Wenn das Fahrzeug zusätzlich mit einem elektronischen Stabilitätssystem zur fahrdynamischen Stabilisierung ausgerüstet ist, beispielsweise ASR, MSR oder ESP, so kann die von einem solchen Stabilitätssystem bereitgestellte und ausgewertete Information über den Fahrbahnzustand, speziell über den Fahrbahnreibwert, dazu benutzt werden, die Regelfunktion des Geschwindigkeitsreglers so zu modifizieren, daß kritische Situationen vermieden werden. Im einfachsten Fall besteht die Modifikation darin, daß die ACC- oder Geschwindigkeitsregelfunktion deaktiviert wird und der Fahrer durch ein geeignetes Signal aufgefordert wird, selbst die Kontrolle zu übernehmen.

Das elektronische Stabilitätssystem überwacht mit geeigneten Sensoren die fahrdynamischen Größen des Fahrzeugs, insbesondere die Beschleunigung, die Gierrate und die Raddrehzahlen, und berechnet anhand dieser Größen unter anderem den aktuellen Fahrbahnreibwert. Auf dieser Grundlage wird dann durch das Stabilitätssystem das Antriebsdrehmoment bzw. die Verteilung des Antriebsdrehmoments auf die Antriebsräder so gesteuert, daß die dynamische Stabilität des Fahrzeugs erhalten bleibt oder wiederhergestellt wird. Da somit die Information über den Fahrbahnreibwert im Stabilitätssystem ohnehin vorhanden ist, kann die Geschwindigkeitsregelfunktion beispielsweise abgeschaltet werden, wenn der Fahrbahnreibwert unterhalb eines bestimmten Schwellenwertes liegt.

Aus der DE 38 36 471 A1 ist eine Vorrichtung nach dem Oberbegriff des Anspruchs 1 zur Regelung der Antriebskraft eines Kraftfahrzeugs bekannt, bei dem die Fahrgeschwindigkeit eines Fahrzeugs auf eine vom Fahrer gewählte Reisegeschwindigkeit eingeregelt werden kann und außerdem eine Antriebsschlupfregelung zur Verbesserung der Traktion des Fahrzeugs durchführbar ist Wenn das Antriebsschlupf-Regelsystem einen Schlupf an einem der Antriebsräder des Fahrzeugs feststellt und die Antriebsschlupfregelung aufnimmt, so wird durch dieses System das Fahrgeschwindigkeitsregelsystem blockiert. Auf diese Weise wird verhindert, daß die beiden Regelsysteme sich gegenseitig ungünstig beeinflussen.

Aus der EP 1 020 315 A1 ist eine automatische Geschwindigkeitsregelung eines Kraftfahrzeugs bekannt, bei dem der Zwischenfahrzeugabstand zu einem vorherfahrenden Fahrzeug konstant gehalten werden kann, wobei die Folgeregelung sanft durchgeführt wird, wenn eine Folgeregelungsabschaltungsbedingung vorliegt, beispielsweise wenn ein niedriger Haftreibungswert infolge nasser oder schneebedeckter Strasse vorliegt. Ist beispielsweise die Folgeregelung aktiv und wird eine Folgeregelungsabschaltbedingung festgestellt, so wird ermittelt ob das Fahrzeug momentan eine Bremsung durchführt. Wird eine Bremsung durchgeführt, so bleibt die Folgeregelung weiterhin aktiv bis die Bremsung beendet wird und erst dann wird die Folgeregelung beendet.

### Vorteile der Erfindung

Die Erfindung mit den in Anspruch 1 angegebenen Merkmalen ermöglicht es, die Betriebssicherheit des Geschwindigkeitsreglers auch dann zu verbessern, wenn dieser Geschwindigkeitsregler bei Fahrzeugen eingesetzt wird, die kein elektronisches Stabilitätssystem aufweisen und in denen somit keine direkte Information über den Fahrbahnreibwert verfügbar ist. Erfindungsgemäß ist nämlich die dem Geschwindigkeitsregler zugeordnete Überwachungseinrichtung so ausgebildet, daß sie den Fahrbahnzustand unmittelbar anhand der gemessenen Raddrehzahlen bewerten kann. Für die Funktion der Überwachungseinrichtung ist somit lediglich erforderlich, daß Raddrehzahlsensoren zur Messung der Raddrehzahlen vorhanden sind. Dies ist beispielsweise bei allen Fahrzeugen der Fall, die ein Antiblockiersystem (ABS) aufweisen.

Zur Bestimmung des Fahrbahnzustands vergleicht die Überwachungseinrichtung die Raddrehzahldifferenzen zwischen den einzelnen Rädern mit typischen Raddrehzahldifferenzen, die bei einer Fahrt auf einer normal griffigen Fahrbahn, beispielsweise auf einer trockenen Asphaltdecke, zu erwarten sind. Wenn, beispielsweise bei Eis- oder Reifglätte, der Fahrbahnreibwert deutlich herabgesetzt ist, treten Raddrehzahldifferenzen auf, die deutlich über diesen typischen Werten liegen. Die Überwachungseinrichtung erkennt diese atypischen Raddrehzahldifferenzen und modifiziert daraufhin die Regelfunktion des Geschwindigkeitsreglers, so daß Regeleingriffe entweder nicht mehr stattfinden oder zumindest nicht zu einer Instabilität des Fahrzeugs führen.

Die Überwachungseinrichtung wertet die Raddrehzahldifferenz zwischen einem Antriebsrad und einem nicht angetriebenen auf derselben Fahrzeugseite aus. Die typische Raddrehzahldifferenz ist dann durch den Antriebsschlupf des angetriebenen Rades auf einer trockenen Fahrbahn bestimmt und ist somit von der aktuellen Beschleunigung abhängig. Diese Beschleunigung kann beispielsweise durch Mitteilung oder Minimumauswahl der Radbeschleunigungen (Ableitung der Raddrehzahl nach der Zeit) sämtlicher Fahrzeugräder bestimmt werden. Wahlweise kann als Maß für die Beschleunigung auch der vom Geschwindigkeitsregler selbst ausgegebene Sollwert für die Beschleunigung herangezogen werden.

Ebenso wertet die Überwachungseinrichtung auch die Raddrehzahldifferenz zwischen zwei angetriebenen oder zwei nicht angetriebenen Rädern auf der linken und rechten Fahrzeugseite aus. Die typische Raddrehzahldifferenz ist dann bei Geradeausfahrt gleich null. Bei einer Kurvenfahrt ist sie vom Kurvenradius abhängig, der anhand des Lenkeinschlags bestimmt werden kann.

Vorteilhafte Ausgestaltungen und Weiterbildungen der Erfindung ergeben sich aus dem abhängigen Anspruch.

Bei der Erfindung führt das Auftreten einer atypischen Raddrehzahldifferenz oder gegebenenfalls auch erst das gehäufte Auftreten einer solchen atypischen Raddrehzahldifferenz zu einer Abschaltung des Geschwindigkeitsreglers.

Bei der Erfindung werden Raddrehzahldifferenzen für mehrere Paarungen der vier Räder des Fahrzeugs gebildet und jeweils mit einem zugehörigen Bezugswert verglichen, der von der Fahrzeugbeschleunigung und/oder dem Lenkeinschlag abhängig ist. Wenn mindestens eine dieser Raddrehzahldifferenzen den signifikant vom Bezugswert abweicht, wird die Regelfunktion abgeschaltet.

### Zeichnung

Ein Ausführungsbeispiel der Erfindung ist in der nachfolgenden Beschreibung näher erläutert.

Es ist ein Kraftfahrzeug mit linken und rechten Vorderrädern, linken und rechten Hinterrädern einem Lenkgestänge für die Vorderräder und einem Antriebssystem vorgesehen das im gezeigten Beispiel die Hinterräder antreibt.

Jedem der vier Räder ist ein Raddrehzahlsensor zugeordnet, der die Raddrehzahl oder Radgeschwindigkeit des betreffenden Rades mißt. Die gemessenen Raddrehzahlen Vfl, Vfr, Vrl und Vrr werden fortlaufend oder periodisch mit kurzer Zykluszeit an ein Antiblockiersystem übermittelt, das anhand dieser Daten in bekannter Weise den Bremsdruck in nicht gezeigten Radbremszylindern regelt.

Vorn im Kraftfahrzeug ist ein Radarsensor eingebaut, mit dem die Abstände und Relativgeschwindigkeiten von vorausfahrenden Fahrzeugen gemessen werden können. Die Ortungsdaten des Radarsensors werden in einem ACC-Regler ausgewertet, der in das Antriebssystem des Fahrzeugs und erforderlichenfalls auch in das Bremssystem eingreift, um die Geschwindigkeit so zu regeln, daß das vorausfahrende Fahrzeug in einem angemessenen Abstand verfolgt wird. Wenn vom Radarsensor kein Vorderfahrzeug geortet wird, erfolgt eine Regelung auf eine vom Fahrer gewählte Wunschgeschwindigkeit.

Dem ACC-Regler ist einer Überwachungseinrichtung zugeordnet, die dazu dient, den Fahrbahnzustand zu bewerten und bei nicht genügend griffiger Fahrbahn ein Abschaltsignal "OFF" an den ACC-Regler zu übermitteln, um die Geschwindigkeitsregelfunktion abzuschalten oder zumindest so zu modifizieren, daß keine Regeleingriffe mehr stattfinden, die zu einem übermäßig hohen Antriebsdrehmoment oder zu einer abrupten Änderung des Antriebsdrehmoments führen würden. Zu diesem Zweck übernimmt die Überwachungseinrichtung vom Antiblockiersystem die gemessenen Radgeschwindigkeiten, die zusammenfassend mit Vxx bezeichnet sind. Am Lenkgestänge ist ein Lenkeinschlagsensor angeordnet, und der gemessene Lenkeinschlag j wird ebenfalls an die Überwachungseinrichtung übermittelt.

Ein einfaches Beispiel für ein mögliche Funktionsweise der Überwachungseinrichtung soll nachstehend erläutert werden.

Es ist eine Programmroutine, vorgesehen die mit Schritt S1 gestartet wird, wenn die Zündung des Fahrzeugs eingeschaltet wird oder der ACC-Regler aktiviert wird.

In Schritt S2 werden die Raddrehzahldifferenzen für alle sechs möglichen Paarungen der Vorder- und Hinterräder mit zugehörigen Bezugswerten verglichen.

Wenn die Differenz zwischen der Raddrehzahl Vrr des angetriebenen rechten Hinterrades und der Raddrehzahl Vfr des nicht angetriebenen rechten Vorderrades größer ist als ein bestimmter Bezugswert REF1(a), so deutet dies auf einen niedrigen Fahrbahnreibwert hin. Der Bezugswert REF1(a) repräsentiert eine typische Raddrehzahldifferenz, die aufgrund des Antriebsschlupfes auf einer normal griffigen Fahrbahn zu höchstens erwarten wäre. Diese typische Raddrehzahldifferenz, ist von der Fahrzeugbeschleunigung a abhängig. Die zur Berechnung des Bezugswertes REF1(a) benötigte Fahrzeugbeschleunigung a kann beispielsweise dadurch bestimmt werden, daß alle vier Raddrehzahlen nach der Zeit differenziert werden und dann das Minimum ausgewählt wird.

Die Raddrehzahldifferenz Vrl-Vfl zwischen den linken Hinter- und Vorderrädern wird in Schritt S2 mit dem gleichen Bezugwertwert REF(a) verglichen.

Weiterhin wird in Schritt S2 die Raddrehzahldifferenz Vfr - Vfl zwischen den rechten und linken Vorerrädern mit einem Bezugswert REF2(j) verglichen. Dieser Bezugswert repräsentiert die Raddrehzahldifferenz, die aufgrund des Lenkeinschlags j zu erwarten wäre, weil die linken und rechten Räder bei einer Kurvenfahrt unterschiedlich weite Wege zurücklegen. Die typische Raddrehzahldifferenz, die durch REF2(j) repräsentiert wird, ist gegeben durch S.V.j/D. Darin ist S die Spurweite des Fahrzeugs (Abstand zwischen linkem und rechtem Vorderrad), V ist die Fahrgeschwindigkeit des Fahrzeugs, die durch Maximumauswahl aus den Radgeschwindigkeiten bestimmt werden kann, und D ist der Radstand. Diese typische Raddrehzahldifferenz ist auch von der Richtung des Lenkeinschlags abhängig und ist in Linkskuven positiv und in Rechtskurven negativ. Die Beziehung Vfr - Vfl ≠ REF2(j) ist so zu verstehen, daß die gemessene Raddrehzahldifferenz um mehr als eine vorgegebene Toleranz von der für diesen Lenkeinschlag typischen Raddrehzahldifferenz REF2(j) abweicht. Wenn diese Bedingung erfüllt ist, so deutet dies ebenfalls auf einen niedrigen Fahrbahnreibwert hin.

Eine entsprechende Bedingung wird in Schritt S2 auch für die Raddrehzahldifferenz Vrr - Vrl der Hinterräder geprüft. Da die Hinterräder im gezeigten Beispiel die Antriebsräder sind, wird es bei glatter Fahrbahn hier noch eher zu einer atypischen Raddrehzahldifferenz kommen.

Im beschriebenen Beispiel werden in Schritt S2 zusätzlich die Raddrehzahldifferenzen Vrl - Vfr und Vrr - Vfl für die diagonal zueinander stehenden Radpaare geprüft und mit einem zugehörigen Bezugswert REF3(j,a) verglichen. Dieser Bezugswert ist sowohl vom Lenkeinschlag als auch von der Beschleunigung a abhängig.

In der Praxis können die gemessenen Raddrehzahlen vor der Ausführung des Schrittes S2 noch geeigneten Filterung unterzogen werden.

Wenn mindestens eine der in Schritt S2 geprüften Bedingungen erfüllt ist, so wird im darauffolgenden Schritt S3 der Zählerstand eines Zählers um 1 erhöht. Ist keine der genannten Bedingungen erfüllt, so wird der Schritt S3 übersprungen.

Im nächsten Schritt S4 wird dann geprüft, ob seit der letzten Erhöhung des Zählerstands in Schritt S3 eine bestimmte Zeit abgelaufen ist. Wenn dies der Fall ist, wird in Schritt S5 der Zählerstand um 1 vermindert. Andernfalls wird der Schritt S5 übersprungen.

In Schritt S6 wird dann geprüft, ob der Zählerstand des Zählers einen bestimmten Wert N, beispielsweise 3, überschritten hat, ist dies nicht der Fall, so erfolgt ein Rücksprung zu Schritt S2, und die Schleife mit den Schritten S2 bis S6 wird mit aktualisierten Raddrehzahlen wiederholt.

Wenn in Schritt S6 der vorgegebene Zählerstand N erreicht wird, so bedeutet dies, daß Ereignisse, in denen eine der in Schritt S2 geprüften Bedingungen erfüllt war, in der letzten Zeit gehäuft aufgetreten sind. Dies läßt darauf schließen, daß es sich bei den atypischen Raddrehzahldifferenzen nicht um zufällige Ausreißer handelte, sondern daß tatsächlich ein niedriger Fahrbahnreibwert vorliegt, der es als ratsam erscheinen läßt, den Geschwindigkeitsregler zu deaktivieren. Demgemäß wird in Schritt S7 das Abschaltsignal an den ACC-Regler ausgegeben, und der Zähler wird auf 0 zurückgesetzt.

Durch die Verminderung des Zählerstands in Schritt S5 wird erreicht, daß sporadisch auftretende Ausreißer bei den Raddrehzahldifferenzen nach einer gewissen Zeit wieder "vergessen" werden.

Eine denkbare Abwandlung besteht darin, daß in Schritt S3 der Zählerstand nicht um 1, sondern um ein größeres Inkrement erhöht wird, beispielsweise um die Anzahl der Bedingungen, die im vorangegangenen Schritt S2 erfüllt waren.

## Patentansprüche

1. Geschwindigkeitsregler für Kraftfahrzeuge, mit einerÜberwachungseinrichtung (32) zum völligen Abschalten des Geschwindigkeitsreglers in Abhängigkeit vom Fahrbahnzustand, wobei die Überwachungseinrichtung (32) dazu ausgebildet ist, den Fahrbahnzustand anhand der gemessenen Raddrehzahlen (Vfl, Vfr, Vrl, Vrr) und des gemessenen Lenkeinschlags (j) zu bewerten, durch Vergleich der Raddrehzahldifferenzen mit typischen Raddrehzahldifferenzen (REF1(a), REF2(j), REF3(j,a)), die bei Kurvenfahrten und/oder aufgrund des Antriebsschlupfes auf einer normal griffigen Fahrbahn auftreten, **dadurch gekennzeichnet, dass** die Raddrehzahldifferenz zwischen dem rechten angetriebenen Hinterrad und dem rechten nicht angetriebenen Vorderrad (Vrr-Vfr) mit einem ersten Bezugswert (REF1(a)) vergleichen wird, dass die Raddrehzahldifferenz zwischen dem linken angetriebenen Hinterrad und dem linken nicht angetriebenen Vorderrad (Vrl - Vfl) mit dem ersten Bezugswert (REF1(a)) vergleichen wird, dass die Raddrehzahldifferenz zwischen den rechten und linken Vorderrädern (Vfr-Vfl) mit einem zweiten Bezugswert (REF2(j)) verglichen wird, dass die Raddrehzahldifferenz zwischen den rechten und linken Hinterrädern (Vrr -Vrl) mit dem zweiten Bezugswert (REF2(j)) verglichen wird sowie die Raddrehzahldifferenz der diagonal zueinander stehenden Räder (Vrl - Vfr, Vrr - Vfl) mit einem dritten bezugswert (REF3(j,a) miteinander verglichen werden und in Abhängigkeit der Vergleiche der Geschwindigkeitsregler abgeschaltet wird.

2. Geschwindigkeitsregler nach Anspruch 1, **dadurch gekennzeichnet, daß** die Überwachungseinrichtung (32) mit einem Antiblockiersystem (26) verbunden ist und von diesem die gemessenen Raddrehzahlen übernimmt.

## Claims

1. Cruise controller for motor vehicles, having a monitoring device (32) for completely switching off the cruise controller as a function of the state of the carriageway, wherein the monitoring device (32) is designed to evaluate the state of the carriageway on the basis of the measured wheel speeds (Vfl, Vfr, Vrl, Vrr) and of the measured steering lock (j), by comparing the wheel speed differences with typical wheel speed differences (REF1(a), REF2(j), REF3(j,a)) which occur when cornering and/or owing to the drive slip on a carriageway with normal grip, **characterized in that** the wheel speed difference between the right-hand driven rear wheel and the right-hand non-driven front wheel (Vrr-Vfr) is compared with a first reference value (REF1(a)), **in that** the wheel speed difference between the left-hand driven rear wheel and the left-hand non-driven front wheel (Vrl-Vfl) is compared with the first reference value (REF1(a)), **in that** the wheel speed difference between the right-hand and left-hand front wheels (Vfr-Vfl) is compared with a second reference value (REF2(j)), **in that** the wheel speed difference between the right-hand and the left-hand rear wheels (Vrr-Vrl) is compared with the second reference value (REF2(j)) and the wheel speed difference between the wheels (Vrl-Vfr, Vrr-Vfl) which are diagonal to one another is compared with a third reference value (REF3(j,a)), and the cruise controller is switched off as a function of the comparisons.

2. Cruise controller according to Claim 1, **characterized in that** the monitoring device (32) is connected to an anti-lock system (26) and it receives the measured wheel speeds therefrom.

## Revendications

1. Régulateur de vitesse de véhicule automobile comportant une installation de surveillance (32) pour couper complètement le régulateur de vitesse en fonction de l'état de la chaussée, l'installation de surveillance (32) étant réalisée pour exploiter l'état de la chaussée à l'aide des vitesses de rotation des roues (Vfl, Vfr, Vrl, Vrr), mesurées et du braquage de roue (j) mesuré par comparaison des différences de vitesse de rotation des roues à des différences caractéristiques de vitesse de rotation des roues (REF1(a)), (REF2(j)), (REF3(j,a)) qui se produisent dans les trajectoires en courbe et/ou à cause du patinage à l'entraînement, sur une chaussée offrant une prise normale,
**caractérisé en ce qu'**
on compare la différence de vitesse de rotation des roues entre la roue arrière motrice droite et la roue avant non motrice droite (Vrr-Vfr), à une première valeur de référence REF1(a)),
on compare la différence de la vitesse de rotation des roues entre la roue arrière entraînée gauche et la roue avant non entraînée gauche (Vrl-Vfl) à la première valeur de référence (REF1(a)),
on compare la différence de vitesse de rotation des roues entre les roues avant droite et gauche (Vfr-Vfl) à une seconde valeur de référence (REF2(j),),
on compare la différence de vitesse de rotation des roues entre les roue arrière droite et gauche (Vfr-Vfl) à la seconde valeur de référence (REF2(j)), et la différence de vitesse de rotation des roues correspondant aux roues disposées en diagonale (Vrl-Vfr, Vrr-Vfl), à une troisième valeur de référence (REF3(j,a)), et en fonction des comparaisons, on coupe le régulateur de vitesse.

2. Régulateur de vitesse selon la revendication 1,
**caractérisé en ce que**
l'installation de surveillance (32) est reliée à un système antiblocage (26) qui lui fournit les vitesses de rotation de roue, mesurées.
